# EUROPEAN PATENT SPECIFICATION

(11) **EP 4 528 978 B1**
(45) Date of publication and mention of the grant of the patent: **16.09.2026**
(21) Application number: 23199222.3
(22) Date of filing: 22.09.2023
(51) Int. Cl.: H02J 50/00, H02J 50/20, H02J 50/40, H04W 52/04

(54) **ENERGY HARVESTING BY A MOBILE DEVICE**
ENERGIEGEWINNUNG DURCH EINE MOBILE VORRICHTUNG
COLLECTE D'ÉNERGIE PAR UN DISPOSITIF MOBILE

(43) Date of publication of application: 26.03.2025
(73) Proprietor: Deutsche Telekom AG, 53113 Bonn (DE)
(72) Inventor: UHL, Daniel, 53117 Bonn (DE); VOGT, Achim, 53175 Bonn (DE)
(74) Representative: RDL Patentanwälte PartG mbB

(56) References cited:
- WO-A1-2023/077893
- US-A1- 2014 011 543
- US-A1- 2022 078 779
- US-A1- 2022 078 790

## Description

The invention relates to a method for operating a cellular network, wherein a first radio unit, RU, of a cellular network provides a mobile device with a first wireless connection, the first radio unit transmitting an electric energy to the mobile device via the first wireless connection, and a control unit of a distributed unit, DU, of the cellular network registers the mobile device, the distributed unit associated with the first radio unit. The invention further relates to a distributed unit for a cellular network and a computer program product.

Mobile devices, often summarized as user equipment, UE, e.g., smartwatches, smartphones, tablets and the like, require an electric energy for a proper operation. Thus, a mobile device usually comprises a rechargeable accumulator for providing the required electric energy. The accumulator, due to its finite capacity, allows for the mobile device to be autonomously operated at most during few days. The accumulator has to be connected to a charger and recharged by the charger in time for a continued operation of the mobile device. A user may find recharging repeatedly the accumulator annoying. Mobile devices may also comprise internet of things, loT, devices.

The cellular network provides the mobile device with a wireless connection. The wireless connection relies on electromagnetic waves sent by the cellular network, more precisely by a radio unit, RU, of the cellular network. The sent electromagnetic waves propagate from the radio unit to the mobile device. The mobile device receives the propagating electromagnetic waves. Of course, the mobile device is also configured for sending electromagnetic waves, and the radio unit is also configured for receiving the electromagnetic waves sent by the mobile device, hence, allowing for a bidirectional communication.

The electromagnetic waves are modulated and demodulated by the radio unit and the mobile device, respectively, in order to imprint information, i.e. data, thereon and to extract the imprinted information therefrom, respectively. An area surrounding the radio unit allowing the mobile device and the radio unit for communicating with each other, i.e., exchanging information, is usually called radio cell.

Each electromagnetic wave comprises transversely oscillating electric and magnetic fields which are phase-shifted relative to each other. Both the electric field and the magnetic field store a field energy oscillating correspondingly. Propagating in space, the electromagnetic wave transmits not only information but also the field energy through the space which may be harvested by the respective receiving device as an electric energy.

US 2022/078790 A1 discloses a method for operating a cellular network wherein a mobile device is cooperatively provided with an electric energy by two or more radio units of the cellular network. Transmission of electric energy is initiated by one of the radio units broadcasting a master beacon. The mobile device, upon receiving the master beacon, requests electric energy to be transmitted from any nearby radio unit by broadcasting a corresponding request which request is responded to by the nearby radio units positively or negatively depending on the respective available spectral resources.

WO 2023/077893 A1 discloses another method for operating a cellular network wherein a mobile device is cooperatively provided with an electric energy by two or more radio units of the cellular network forming a cooperative charging system. The cooperative charging system, upon receiving respective requests from a mobile device, determine, in case the mobile device requests electric energy, a main radio unit providing a main energy beam and, in case the mobile device requests more electric energy, an auxiliary radio unit providing an auxiliary energy beam. The main energy beam provides the most electric energy among all available beams and the auxiliary energy beam provides the second most electric energy among all available beams, the respective provided electric energies detected by the mobile device.

US 2022/078779 A1 discloses still another method for operating a cellular network, wherein a radio unit providing a data connection for a mobile device, upon an energy harvesting request of the connected mobile device, determines a primary radio unit for providing the mobile device with an energy harvesting connection, and the determined primary radio unit determines secondary radio units for providing the mobile device with additional energy harvesting connections depending on a position of the mobile device.

However, harvesting an electric energy from the electromagnetic wave, i.e., the wireless connection, adversely affects receiving the imprinted information, i.e., the communication. The more energy is harvested from the electromagnetic wave the more erroneous the imprinted information is extracted. Not correctable errors in the extracted information cause the information to be transmitted again which increases a load of both the radio unit and the mobile device, respectively, and lowers a quality of the communication.

It is an object of the invention to suggest a method for operating a cellular network which allows the mobile device for harvesting an electric energy from the wireless connection without negatively affecting a communication via the wireless connection. Further objects of the invention are to provide a distributed unit for a cellular network and a computer program product.

A first aspect of the invention is a method for operating a cellular network, wherein a first radio unit, RU, of a cellular network provides a mobile device with a first wireless connection, the first radio unit transmitting an electric energy to the mobile device via the first wireless connection, and a control unit of a distributed unit, DU, of the cellular network registers the mobile device, the distributed unit associated with the first radio unit.

The cellular network authenticates the mobile device and provides the mobile device with the first wireless connection only after a successful authentication. A communication demand of the mobile device may be defined, e.g., by a maximum latency and/or a minimal bitrate. The cellular network may meet the communication demand by applying a quality of service, QoS, to the provided wireless connection.

According to the invention the control unit determines an additional electric energy to be transmitted to the registered mobile device and, depending on the determined additional electric energy, selects at least one of the first radio unit and a second radio unit different from the first radio unit, neighboring the first radio unit and associated with the distributed unit to transmit the determined additional electric energy to the registered mobile device via the first wireless connection and/or a second wireless connection provided by the second radio unit when an available capacity of the selected at least one radio unit allows for transmitting the determined additional electric energy. The control unit causes the selected first radio unit and/or second radio unit to transmit the determined additional electric energy to the registered mobile device via the first wireless connection and/or the second wireless connection. The registered mobile device is operated at least partially by means of the transmitted additional electric energy. The terms "first" and "second" do not imply a hierarchy but only differentiate the two radio units. The first radio unit and the second radio unit may be consistently interchanged, of course. Each radio unit may comprise a base transceiver station, BTS, and an antenna connected to the base transceiver station.

The mobile device is configured to simultaneously support two different wireless connections. The first wireless connection and the second wireless connection result in a very symmetrical situation with respect to the first radio unit and the second radio unit.

The additional electric energy may be determined dependent on a type of the mobile device, and/or a state of charge, SoC, of an accumulator of the mobile device. The mobile device may send the type and/or the state of charge to the control unit via the first wireless connection.

The first radio unit and the second radio cell generate a first radio cell and a second radio cell, respectively. The first radio cell and the second radio cell overlap and define a common sectional area covered by both the first radio unit and the second unit. The mobile device is located in the common section area.

The available capacity depends on the power configuration of the respective radio unit on the one hand and further mobile devices connected to the respective radio unit on the other hand. The more further mobile devices are connected to the respective radio unit the smaller the available capacity is. Of course, the available capacity varies over time while mobile devices connect to or disconnect from the respective radio unit, either by terminating a respective wireless connection or by spatially leaving the radio cell generated by the respective radio unit.

The additional electric energy is transmitted by means of electromagnetic waves, i.e., of the first wireless connection and/or the second wireless connection. The additional electric energy may be transmitted either cooperatively by the first radio unit and the second radio unit or by one of the first radio unit and the second radio unit taken alone. The mobile device harvests the transmitted additional electric energy.

The available capacity allows for transmitting the determined additional electric energy when communications within the respective radio cell are not adversely affected by the the transmission of the determined additional electric energy.

The transmitted additional electric energy may be less than, equal to or more than the electric energy required by the mobile device during operation. In other words, during the operation of the mobile device the accumulator of the mobile device may be discharged, not discharged or even be charged from the wireless connection while the mobile device is operated.

Preferably, the control unit transmits a notification to the mobile device via the first wireless connection when respective available capacities of the first radio unit and the second radio unit do not allow for transmitting the determined additional electric energy, the notification indicating a lower quality of a data transmission and/or a lower amount of transmitted electric energy via the first wireless connection. A user of the mobile device may respond to the notification by agreeing or disagreeing. The agreement may occur implicitly. The disagreement may occur explicitly switching off energy harvesting of the mobile device.

The control unit may determine an available capacity of the first radio unit and select the first radio unit as the at least one radio unit when the determined available capacity of the first radio unit allows for providing the determined additional electric energy. The first radio cell is capable to support the communication and the transmission of additional electric energy at the same time.

Advantageously, transmitting the determined additional electric energy comprises increasing a transmission power of the first wireless connection. The transmission power is increased for reliably providing the communication demand.

In an embodiment, the first wireless connection is provided as a first radio beam directed to the mobile device and/or the second wireless connection is provided as a second radio beam to the mobile device. Each radio beam concentrates the electromagnetic waves to preferably propagate into a small solid angle comprising the mobile device. Thus, the radio unit can strongly reduce the transmission power as compared with an isotropic emission of the electromagnetic waves.

The control unit may determine an available capacity of the second radio unit and selects the second radio unit as the at least one radio unit when the determined available capacity of the first radio unit does not allow for transmitting the determined additional electric energy and the determined available capacity of the second radio unit allows for transmitting the determined additional electric energy. The first radio cell is not capable to support the communication and the transmission of additional electric energy and only supports the communication. The second radio cell is capable to transmit the determined additional electric energy. As a result, the mobile device receives the determined additional electric energy and the information related to the communication from different radio units.

Determining the additional electric energy to be transmitted particularly comprises detecting a low quality of a data transmission via the respective wireless connection. For instance, the radio unit detects the low quality when transmission of data fails, i.e., data is repeatedly transmitted.

Preferably, the control unit permanently determines a load of each radio unit transmitting the determined additional electric energy and causes said radio unit to stop transmitting the determined additional electric energy when the determined load contravenes the transmission of the determined additional electric energy. The permanent determination of the load allows the control unit to immediately react to an occurring overload of the radio unit transmitting the determined additional electric energy. The overload may be caused by further mobile devices connecting or connected to the radio unit.

Stopping transmitting the determined additional electric energy may comprise reducing a transmission power of the respective wireless connection. Due to the reduced transmission power wireless connections to further mobile devices connecting or connected to the radio unit are prevented from being adversely affected by the mobile device.

Particularly, the control unit permanently determines a load of the radio unit not transmitting the determined additional electric energy and causes said radio unit to start transmitting the determined additional electric energy when the determined load is compatible with the transmission of the determined additional electric energy. The capacity of the cellular network is optimally used.

Preferably, the control unit transmits a notification to the mobile device via the respective wireless connection when the determined load contravenes transmission of the determined additional electric energy, the notification indicating a lower quality of the communication and/or a lower amount of transmitted electric energy via the respective wireless connection. Again, a user of the mobile device may respond to the notification by agreeing or disagreeing. The agreement may occur implicitly. The disagreement may occur explicitly switching off energy harvesting of the mobile device. Different from the case described above the mobile device has already successfully harvested an electric energy before the overload occurred. In the case described above, the available capacity is not compatible with energy harvesting when establishing the first wireless connection.

The control unit may permanently determine respective loads of the first radio unit and the second radio unit when neither radio unit transmits the determined additional electric energy and causes at least one of the first radio unit and the second radio unit to transmit the determined additional electric energy when the determined respective loads of the radio units are compatible with the transmission of the determined additional electric energy. In other words, energy harvesting becomes possible only or again at a time distance from establishing the first wireless connection.

The control unit causes the first radio unit to stop providing the first wireless connection and the second radio unit to start providing the second wireless connection when the determined load of the second radio unit is compatible with the transmission of the determined additional electric energy. In other words, the mobile device communicates via the second wireless connection and harvests an electric energy from the second wireless connection only, i.e., the second radio unit completely takes the role of the first radio unit.

The above mentioned cases provide the method with a high flexibility and allow for an optimal use of the capacity of the cellular network.

Another aspect of the invention is a distributed unit for a cellular network, the distributed unit comprising a control unit.

According to the invention, the control unit is configured for carrying out a method according to an embodiment of the invention together with a mobile device. The control unit enables the cellular network to allow mobile devices for energy harvesting while, at the same time, communication demands of the mobile devices are met.

A third aspect of the invention is a computer program product, comprising a digital storage medium storing a program code. The digital storage medium may comprise a hard disk, a digital versatile disk (DVD), a Universal Serial Bus (USB) stick, a random access memory (RAM) and the like and be provided locally or in a cloud connected to the internet, i.e. an internet cloud. The program code may be executed immediately from the storage medium or after an installation.

According to the invention, the program code causes a computing device to carry out a method according to an embodiment of the invention as the control unit of a distributed unit, DU, of a cellular network together with a mobile device when being executed by the computing device. The computer program product provides the distributed unit with an additional control unit or improves an existing control unit of the distributed unit. The control unit enables the cellular network for supporting energy harvesting by mobile devices connected to the cellular network.

It is an essential advantage of the inventive method that the mobile device may harvest an electric energy from a wireless connection without negatively affecting a communication via the wireless connection. As a result, recharging an accumulator of the mobile device does not require connecting the mobile device to a charge. Rather the accumulator is charged during a normal operation of the mobile device.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.
- Fig. 1: schematically shows an entity diagram of a cellular network comprising a distributed unit, DU, according to an embodiment of the invention;
- Fig. 2: schematically shows a detail of the cellular network shown in fig. 1.

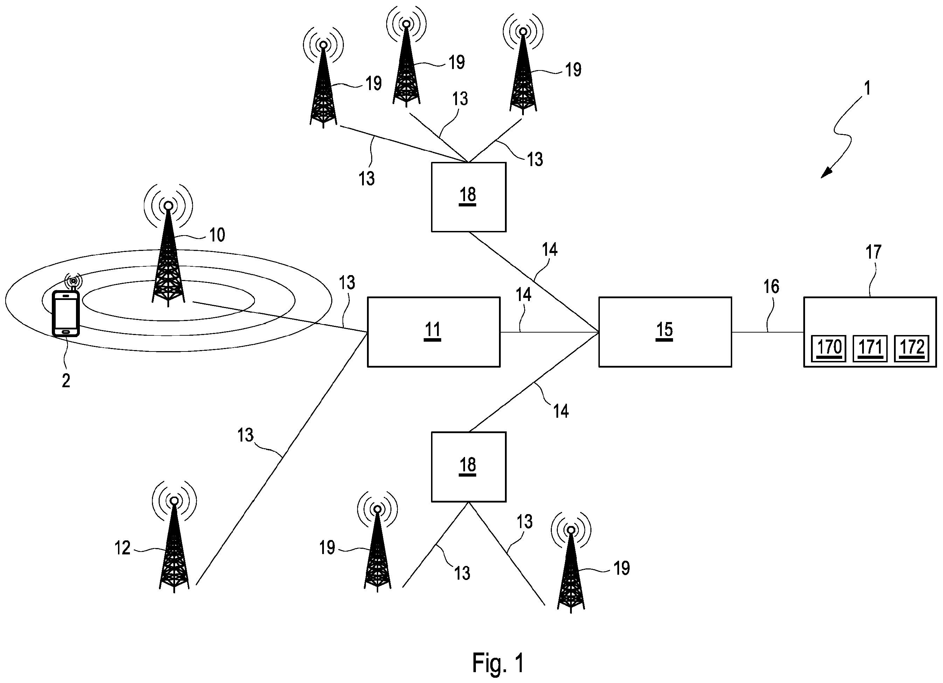

Fig. 1 schematically shows an entity diagram of a cellular network 1 comprising a distributed unit, DU, 11 according to an embodiment of the invention.

The cellular network 1 further comprises a first radio unit 10, a second radio unit 12 and fronthauls 13 connecting the first radio unit 10 and the second radio unit 12 to the distributed radio unit 11. Of course, the communication network 1 may comprise further distribution units 18, further radio units 19 and a plurality of fronthauls 13, each further radio unit 19 connected to a further distribution unit 18 by a fronthaul 13.

The cellular network 1 may further comprise a centralized unit, CU, 15 and a plurality of midhauls 14, each midhaul 14 connecting a distributed unit 11, 18 to the centralized unit 15.

The cellular network 1 may further comprise a core network 17 and a backhaul 16 connecting the centralized unit 15 to the core network 17. The core network 17 may provide the cellular network 1 with an access and mobility function, AMF, 170, a session management function, SMF, 171 and further network functions 172.

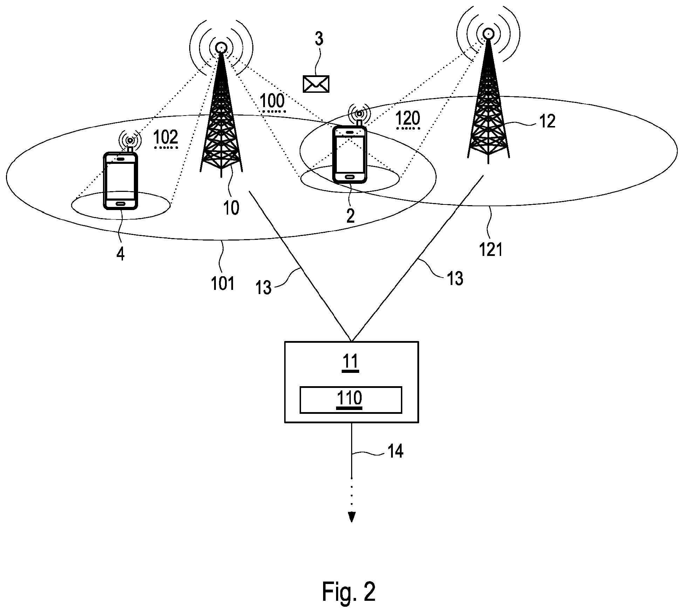

Fig. 2 schematically shows a detail of the cellular network 1 shown in fig. 1. The first radio unit 10 generates a first radio cell 101. The second radio unit 12 is different from the first radio unit 10, neighbors the first radio unit 10 and generates a second radio cell 121. The first radio unit 10 and the second radio unit 12 are associated with the distributed unit 11.

The second radio cell 121 partially overlaps the first radio cell 101. A mobile device 2 and a further mobile device are located in the first radio cell 101. The first mobile device 2 is located in an overlap area of the first radio cell 101 and the second radio cell 121, i.e., in both the first radio cell 101 and the second radio cell 121.

The first radio unit 10 is configured for providing the mobile device 2 and the further mobile device 4 with a first wireless connections 100 and a further wire less connection 102, respectively. The second radio unit 12 is configured for providing the mobile device 2 with a second wireless connection 120.

The distributed unit 11 is suitable for the cellular network 1 and comprises a control unit 110. The control unit 110 is configured for carrying out a method according to an embodiment of the invention as follows together with the mobile device 2.

The control unit 110 may be implemented by means of a computer program product. The computer program product comprises a digital storage medium storing a program code. The program code causes a computing device to carry out the inventive method as the control unit 110 of the distributed unit, DU, 11 of the cellular network 1 together with the mobile device 2 when being executed by the computing device.

The cellular network 1, according to the invention, is operated as follows.

The first radio unit, RU, 10 of the cellular network 1 provides the mobile device 2 with the first wireless connection 100, the first radio unit transmitting an electric energy to the mobile device via the first wireless connection. The first wireless connection 100 is preferably provided as a first radio beam 100 directed to the mobile device 2. The second wireless connection 120 is preferably provided as a second radio beam 120 to the mobile device 2. The mobile device 2 communicates, i.e. sends and receives data, via the provided first wireless connection 100.

The control unit 110 of the distributed unit, DU, 11 of the cellular network 1 registers the mobile device 2.

The control unit 110 determines an additional electric energy to be transmitted to the registered mobile device 2 and, depending on the determined additional electric energy, selects at least one of the first radio unit 10 and the second radio unit 12 to transmit the determined additional electric energy to the registered mobile device 2 via the first wireless connection 100 and/or the second wireless connection 120 provided by the second radio unit 12 when an available capacity of the selected at least one radio unit 10, 12 allows for transmitting the determined additional electric energy. Determining the additional electric energy to be transmitted may comprise detecting a low quality of a data transmission via the respective wireless connection 100, 120.

The control unit 110 may determine an available capacity of the first radio unit 10 and selects the first radio unit 10 as the at least one radio unit when the determined available capacity of the first radio unit 10 allows for providing the determined additional electric energy.

Transmitting the determined additional electric energy may comprise increasing a transmission power of the first wireless connection 100.

The control unit 110 may determine an available capacity of the second radio unit 12 and select the second radio unit 12 as the at least one radio unit when the available capacity of the first radio unit 10 does not allow for transmitting the determined additional electric energy and the available capacity of the second radio unit 12 allows for transmitting the determined additional electric energy.

The control unit 110 causes the selected first radio unit 10 and/or the selected second radio unit 12 to transmit the determined additional electric energy to the registered mobile device 2 via the first wireless connection 100 and/or the second wireless connection 120.

The control unit 110 may transmit a notification 3 to the mobile device 2 via the first wireless connection 100 when respective available capacities of the first radio unit 10 and the second radio unit 12 do not allow for transmitting the determined additional electric energy, the notification 3 indicating a lower quality of a data transmission and/or a lower amount of transmitted electric energy via the first wireless connection 100.

The control unit 110 may permanently determine a load of each radio unit 10, 12 transmitting the determined additional electric energy and causes said radio unit 10,12 to stop transmitting the determined additional electric energy when the determined load contravenes the transmission of the determined additional electric energy.

Stopping transmitting the detailed additional electric energy preferably comprises reducing a transmission power of the respective wireless connection 100, 120.

Further, the control unit 110 may permanently determine a load of the radio unit 10, 12 not transmitting the determined additional electric energy and causes said radio unit 10, 12 to start transmitting the determined additional electric energy when the determined load is compatible with the transmission of the determined additional electric energy.

The control unit 110 may transmit a notification 3 to the mobile device 2 via the respective wireless connection 100, 120 when the determined load contravenes transmission of the determined additional electric energy, the notification 3 indicating a lower quality of a data transmission and/or a lower amount of transmitted electric energy via the respective wireless connection 100, 120.

The control unit 110 may permanently determine respective loads of the first radio unit 10 and the second radio unit 12 when neither radio unit 10, 12 transmits the determined additional electric energy and causes at least one of the first radio unit 10 and the second radio unit 12 to transmit the determined additional electric energy when the determined respective loads of the radio units 10, 12 is compatible with the transmission of the determined additional electric energy.

The control unit 110 may also cause the first radio unit 10 to stop providing the first wireless connection 100 and the second radio unit 12 to start providing the second wireless connection 120 when the determined load of the second radio unit 12 is compatible with the transmission of the determined additional electric energy.

### Reference numerals

- 1: cellular network
- 10: first radio unit
- 100: first wireless connection, first radio beam
- 101: first radio cell
- 102: further wireless connection
- 11: distributed unit, DU
- 110: control unit
- 12: second radio unit
- 120: second wireless connection, second radio beam
- 121: second radio cell
- 13: fronthaul
- 14: midhaul
- 15: centralized unit, CU
- 16: backhaul
- 17: core network
- 170: access and mobility function, AMF
- 171: session management function, SMF
- 172: further function
- 18: further distributed unit
- 19: further radio unit
- 2: mobile device, user equipment, UE
- 3: notification
- 4: further mobile device

## Claims

1. A method for operating a cellular network (1), wherein
- a first radio unit, RU, (10) of a cellular network (1) provides a mobile device (2) with a first wireless connection (100), the first radio unit (10) transmitting an electric energy to the mobile device (2) via the first wireless connection (100);
- a control unit (110) of a distributed unit, DU, (11) of the cellular network (1) registers the mobile device (2), the distributed unit (11) associated with the first radio unit (10);
**characterized in that**:
- the control unit (110) determines an additional electric energy to be transmitted to the registered mobile device (2) and, depending on the determined additional electric energy, selects at least one of the first radio unit (10) and a second radio unit (12) different from the first radio unit (10), neighboring the first radio unit (10) and associated with the distributed unit (11) to transmit the determined additional electric energy to the registered mobile device (2) via the first wireless connection (100) and/or a second wireless connection (120) provided by the second radio unit (12) when an available capacity of the selected at least one radio unit (10, 12) allows for transmitting the determined additional electric energy;
- the control unit (110) causes the selected first radio unit (10) and/or second radio unit (12) to transmit the determined additional electric energy to the registered mobile device (2) via the first wireless connection (100) and/or the second wireless connection (120).

2. The method according to claim 1, wherein the control unit (110) transmits a notification (3) to the mobile device (2) via the first wireless connection (100) when respective available capacities of the first radio unit (10) and the second radio unit (12) do not allow for transmitting the determined additional electric energy, the notification (3) indicating a lower quality of a data transmission and/or a lower amount of transmitted electric energy via the first wireless connection (100).

3. The method according to claim 1 or 2, wherein the control unit (110) determines an available capacity of the first radio unit (10) and selects the first radio unit (10) as the at least one radio unit when the determined available capacity of the first radio unit (10) allows for providing the determined additional electric energy.

4. The method according to one of claims 1 to 3, wherein transmitting the determined additional electric energy comprises increasing a transmission power of the first wireless connection (100).

5. The method according to one of claims 1 to 4, wherein the first wireless connection (100) is provided as a first radio beam (100) directed to the mobile device (2) and/or the second wireless connection (120) is provided as a second radio beam (120) to the mobile device (2).

6. The method according to one of claims 1 to 5, wherein the control unit (110) determines an available capacity of the second radio unit (12) and selects the second radio unit (12) as the at least one radio unit when the determined available capacity of the first radio unit (10) does not allow for transmitting the determined additional electric energy and the available capacity of the second radio unit (12) allows for transmitting the determined additional electric energy.

7. The method according to one of claims 1 to 6, wherein determining the additional electric energy to be transmitted comprises detecting a low quality of a data transmission via the respective wireless connection (100, 120).

8. The method according to one of claims 1 to 7, wherein the control unit (110) permanently determines a load of each radio unit (10, 12) transmitting the determined additional electric energy and causes said radio unit (10,12) to stop transmitting the determined additional electric energy when the determined load contravenes the transmission of the determined additional electric energy.

9. The method according to claim 8, wherein stopping transmitting the determined additional electric energy comprises reducing a transmission power of the respective wireless connection (100, 120).

10. The method according to one of claims 1 to 9, wherein the control unit (110) permanently determines a load of the radio unit (10, 12) not transmitting the determined additional electric energy and causes said radio unit (10, 12) to start transmitting the determined additional electric energy when the determined load is compatible with the transmission of the determined additional electric energy.

11. The method according to claim 10, wherein the control unit (110) transmits a notification (3) to the mobile device (2) via the respective wireless connection (100, 120) when the determined load contravenes transmission of the determined additional electric energy, the notification (3) indicating a lower quality of a data transmission and/or a lower amount of transmitted electric energy via the respective wireless connection (100, 120).

12. The method according to claim 10 or 11, wherein the control unit (110) permanently determines respective loads of the first radio unit (10) and the second radio unit (12) when neither radio unit (10,12) transmits the determined additional electric energy and causes at least one of the first radio unit (10) and the second radio unit (12) to transmit the determined additional electric energy when the determined respective loads of the radio units (10,12) are compatible with the transmission of the determined additional electric energy.

13. The method according to one of claims 10 to 12, wherein the control unit (110) causes the first radio unit (10) to stop providing the first wireless connection (100) and the second radio unit (12) to start providing the second wireless connection (120) when the determined load of the second radio unit (12) is compatible with the transmission of the determined additional electric energy.

14. A distributed unit (11) for a cellular network (1), the distributed unit (11) comprising a control unit (110) configured for carrying out a method according to one of claims 1 to 13.

15. A computer program product, comprising a digital storage medium storing a program code, which when executed by a computing device, causes the computing device to perform the method according to any one of claims 1 to 13.

## Patentansprüche

1. Verfahren zum Betreiben eines Mobilfunknetzes (1), wobei
- eine erste Funkeinheit, RU, (10) eines Mobilfunknetzes (1) einer mobilen Vorrichtung (2) eine erste drahtlose Verbindung (100) bereitstellt, wobei die erste Funkeinheit (10) elektrische Energie über die erste drahtlose Verbindung (100) an die mobile Vorrichtung (2) überträgt;
- eine Steuereinheit (110) einer verteilten Einheit, DU, (11) des Mobilfunknetzes (1) die mobile Vorrichtung (2) registriert, wobei die verteilte Einheit (11) der ersten Funkeinheit (10) zugeordnet ist; **dadurch gekennzeichnet, dass**:
- die Steuereinheit (110) eine an die registrierte mobile Vorrichtung (2) zu übertragende zusätzliche elektrische Energie bestimmt und in Abhängigkeit von der bestimmten zusätzlichen elektrischen Energie mindestens eine aus der ersten Funkeinheit (10) und einer zweiten Funkeinheit (12), die von der ersten Funkeinheit (10) verschieden, zur ersten Funkeinheit (10) benachbart und der verteilten Einheit (11) zugeordnet ist, auswählt, um die bestimmte zusätzliche elektrische Energie über die erste drahtlose Verbindung (100) und/oder eine von der zweiten Funkeinheit (12) bereitgestellte zweite drahtlose Verbindung (120) an die registrierte mobile Vorrichtung (2) zu übertragen, wenn eine verfügbare Kapazität der ausgewählten mindestens einen Funkeinheit (10, 12) die Übertragung der bestimmten zusätzlichen elektrischen Energie zulässt;
- die Steuereinheit (110) die ausgewählte erste Funkeinheit (10) und/oder zweite Funkeinheit (12) veranlasst, die bestimmte zusätzliche elektrische Energie über die erste drahtlose Verbindung (100) und/oder die zweite drahtlose Verbindung (120) an die registrierte mobile Vorrichtung (2) zu übertragen.

2. Verfahren nach Anspruch 1, wobei die Steuereinheit (110) eine Benachrichtigung (3) über die erste drahtlose Verbindung (100) an die mobile Vorrichtung (2) überträgt, wenn die jeweiligen verfügbaren Kapazitäten der ersten Funkeinheit (10) und der zweiten Funkeinheit (12) die Übertragung der bestimmten zusätzlichen elektrischen Energie nicht ermöglichen, wobei die Benachrichtigung (3) eine geringere Qualität einer Datenübertragung und/oder eine geringere Menge über die erste drahtlose Verbindung (100) übertragener elektrischer Energie anzeigt.

3. Verfahren nach Anspruch 1 oder 2, wobei die Steuereinheit (110) eine verfügbare Kapazität der ersten Funkeinheit (10) bestimmt und die erste Funkeinheit (10) als die mindestens eine Funkeinheit auswählt, wenn die bestimmte verfügbare Kapazität der ersten Funkeinheit (10) das Bereitstellen der bestimmten zusätzlichen elektrischen Energie ermöglicht.

4. Verfahren nach einem der Ansprüche 1 bis 3, wobei das Übertragen der bestimmten zusätzlichen elektrischen Energie das Erhöhen einer Sendeleistung der ersten drahtlosen Verbindung (100) umfasst.

5. Verfahren nach einem der Ansprüche 1 bis 4, wobei die erste drahtlose Verbindung (100) als ein auf die mobile Vorrichtung (2) gerichteter erster Funkstrahl (100) bereitgestellt wird und/oder die zweite drahtlose Verbindung (120) als ein auf die mobile Vorrichtung (2) gerichteter zweiter Funkstrahl (120) bereitgestellt wird.

6. Verfahren nach einem der Ansprüche 1 bis 5, wobei die Steuereinheit (110) eine verfügbare Kapazität der zweiten Funkeinheit (12) bestimmt und die zweite Funkeinheit (12) als die mindestens eine Funkeinheit auswählt, wenn die bestimmte verfügbare Kapazität der ersten Funkeinheit (10) das Übertragen der bestimmten zusätzlichen elektrischen Energie nicht ermöglicht und die verfügbare Kapazität der zweiten Funkeinheit (12) das Übertragen der bestimmten zusätzlichen elektrischen Energie ermöglicht.

7. Verfahren nach einem der Ansprüche 1 bis 6, wobei das Bestimmen der zusätzlich zu übertragenden elektrischen Energie das Erfassen einer geringen Qualität einer Datenübertragung über die jeweilige drahtlose Verbindung (100, 120) umfasst.

8. Verfahren nach einem der Ansprüche 1 bis 7, wobei die Steuereinheit (110) fortlaufend eine Auslastung jeder Funkeinheit (10, 12), die die bestimmte zusätzliche elektrische Energie überträgt, bestimmt und die betreffende Funkeinheit (10, 12) veranlasst, das Übertragen der bestimmten zusätzlichen elektrischen Energie zu beenden, wenn die bestimmte Auslastung der Übertragung der bestimmten zusätzlichen elektrischen Energie entgegensteht.

9. Verfahren nach Anspruch 8, wobei das Beenden des Übertragens der bestimmten zusätzlichen elektrischen Energie das Verringern einer Sendeleistung der jeweiligen drahtlosen Verbindung (100, 120) umfasst.

10. Verfahren nach einem der Ansprüche 1 bis 9, wobei die Steuereinheit (110) fortlaufend eine Auslastung der die bestimmte zusätzliche elektrische Energie nicht übertragenden Funkeinheit (10, 12) bestimmt und die betreffende Funkeinheit (10, 12) veranlasst, mit dem Übertragen der bestimmten zusätzlichen elektrischen Energie zu beginnen, wenn die bestimmte Auslastung mit der Übertragung der bestimmten zusätzlichen elektrischen Energie vereinbar ist.

11. Verfahren nach Anspruch 10, wobei die Steuereinheit (110) eine Benachrichtigung (3) über die jeweilige drahtlose Verbindung (100, 120) an die mobile Vorrichtung (2) überträgt, wenn die bestimmte Auslastung der Übertragung der bestimmten zusätzlichen elektrischen Energie entgegensteht, wobei die Benachrichtigung (3) eine geringere Qualität einer Datenübertragung und/oder eine geringere Menge über die jeweilige drahtlose Verbindung (100, 120) übertragener elektrischer Energie anzeigt.

12. Verfahren nach Anspruch 10 oder 11, wobei die Steuereinheit (110) fortlaufend die jeweiligen Auslastungen der ersten Funkeinheit (10) und der zweiten Funkeinheit (12) bestimmt, wenn keine der Funkeinheiten (10, 12) die bestimmte zusätzliche elektrische Energie überträgt, und mindestens eine aus der ersten Funkeinheit (10) und der zweiten Funkeinheit (12) veranlasst, die bestimmte zusätzliche elektrische Energie zu übertragen, wenn die bestimmten jeweiligen Auslastungen der Funkeinheiten (10, 12) mit der Übertragung der bestimmten zusätzlichen elektrischen Energie vereinbar sind.

13. Verfahren nach einem der Ansprüche 10 bis 12, wobei die Steuereinheit (110) die erste Funkeinheit (10) veranlasst, das Bereitstellen der ersten drahtlosen Verbindung (100) zu beenden, und die zweite Funkeinheit (12) veranlasst, mit dem Bereitstellen der zweiten drahtlosen Verbindung (120) zu beginnen, wenn die bestimmte Auslastung der zweiten Funkeinheit (12) mit der Übertragung der bestimmten zusätzlichen elektrischen Energie vereinbar ist.

14. Verteilte Einheit (11) für ein Mobilfunknetz (1), wobei die verteilte Einheit (11) eine Steuereinheit (110) umfasst, die dazu eingerichtet ist, ein Verfahren nach einem der Ansprüche 1 bis 13 auszuführen.

15. Computerprogrammprodukt, umfassend ein digitales Speichermedium, auf dem ein Programmcode gespeichert ist, der bei Ausführung durch eine Rechenvorrichtung die Rechenvorrichtung veranlasst, das Verfahren nach einem der Ansprüche 1 bis 13 auszuführen.

## Revendications

1. Procédé d'opération d'un réseau cellulaire (1), dans lequel
- une première unité radio, RU, (10) d'un réseau cellulaire (1) fournit à un terminal mobile (2) une première connexion sans fil (100), la première unité radio (10) transmettant de l'énergie électrique au terminal mobile (2) via la première connexion sans fil (100) ;
- une unité de commande (110) d'une unité distribuée, DU, (11) du réseau cellulaire (1) enregistre le terminal mobile (2), l'unité distribuée (11) étant associée à la première unité radio (10) ;
**caractérisé en ce que** :
- l'unité de commande (110) détermine une quantité d'énergie électrique supplémentaire à transmettre au terminal mobile (2) enregistré et, en fonction de la quantité d'énergie électrique supplémentaire déterminée, sélectionne au moins une parmi la première unité radio (10) et une deuxième unité radio (12), différente de la première unité radio (10), voisine de la première unité radio (10) et associée à l'unité distribuée (11), afin de transmettre l'énergie électrique supplémentaire déterminée au terminal mobile (2) enregistré via la première connexion sans fil (100) et/ou une deuxième connexion sans fil (120) fournie par la deuxième unité radio (12), lorsque la capacité disponible de la au moins une unité radio (10, 12) sélectionnée permet de transmettre l'énergie électrique supplémentaire déterminée ;
- l'unité de commande (110) fait en sorte que la première unité radio (10) et/ou la deuxième unité radio (12) sélectionnée(s) transmette(nt) l'énergie électrique supplémentaire déterminée au terminal mobile (2) enregistré via la première connexion sans fil (100) et/ou la deuxième connexion sans fil (120).

2. Procédé selon la revendication 1, dans lequel l'unité de commande (110) transmet une notification (3) au terminal mobile (2) via la première connexion sans fil (100) lorsque les capacités disponibles respectives de la première unité radio (10) et de la deuxième unité radio (12) ne permettent pas de transmettre l'énergie électrique supplémentaire déterminée, la notification (3) indiquant une qualité moindre de la transmission de données et/ou une quantité moindre d'énergie électrique transmise via la première connexion sans fil (100).

3. Procédé selon la revendication 1 ou 2, dans lequel l'unité de commande (110) détermine une capacité disponible de la première unité radio (10) et sélectionne la première unité radio (10) comme étant la au moins une unité radio lorsque la capacité disponible déterminée de la première unité radio (10) permet de fournir l'énergie électrique supplémentaire déterminée.

4. Procédé selon l'une des revendications 1 à 3, dans lequel la transmission de l'énergie électrique supplémentaire déterminée comprend l'augmentation d'une puissance de transmission de la première connexion sans fil (100).

5. Procédé selon l'une des revendications 1 à 4, dans lequel la première connexion sans fil (100) est fournie sous la forme d'un premier faisceau radio (100) dirigé vers le terminal mobile (2) et/ou la deuxième connexion sans fil (120) est fournie sous la forme d'un deuxième faisceau radio (120) vers le terminal mobile (2).

6. Procédé selon l'une des revendications 1 à 5, dans lequel l'unité de commande (110) détermine une capacité disponible de la deuxième unité radio (12) et sélectionne la deuxième unité radio (12) comme étant la au moins une unité radio lorsque la capacité disponible déterminée de la première unité radio (10) ne permet pas de transmettre l'énergie électrique supplémentaire déterminée et que la capacité disponible de la deuxième unité radio (12) permet de transmettre l'énergie électrique supplémentaire déterminée.

7. Procédé selon l'une des revendications 1 à 6, dans lequel la détermination de l'énergie électrique supplémentaire à transmettre comprend une détection d'une mauvaise qualité de transmission de données via la connexion sans fil (100, 120) respective.

8. Procédé selon l'une des revendications 1 à 7, dans lequel l'unité de commande (110) détermine en permanence une charge de chaque unité radio (10, 12) transmettant l'énergie électrique supplémentaire déterminée et fait en sorte que ladite unité radio (10, 12) cesse de transmettre l'énergie électrique supplémentaire déterminée lorsque la charge déterminée s'oppose à la transmission de l'énergie électrique supplémentaire déterminée.

9. Procédé selon la revendication 8, dans lequel l'arrêt de la transmission de l'énergie électrique supplémentaire déterminée comprend la réduction d'une puissance de transmission de la connexion sans fil (100, 120) respective.

10. Procédé selon l'une des revendications 1 à 9, dans lequel l'unité de commande (110) détermine en permanence une charge de l'unité radio (10, 12) ne transmettant pas l'énergie électrique supplémentaire déterminée et fait en sorte que ladite unité radio (10, 12) commence à transmettre l'énergie électrique supplémentaire déterminée lorsque la charge déterminée est compatible avec la transmission de l'énergie électrique supplémentaire déterminée.

11. Procédé selon la revendication 10, dans lequel l'unité de commande (110) transmet une notification (3) au terminal mobile (2) via la connexion sans fil (100, 120) respective lorsque la charge déterminée s'oppose à la transmission de l'énergie électrique supplémentaire déterminée, la notification (3) indiquant une qualité moindre de la transmission de données et/ou une quantité moindre d'énergie électrique transmise via la connexion sans fil (100, 120) respective.

12. Procédé selon la revendication 10 ou 11, dans lequel l'unité de commande (110) détermine en permanence les charges respectives de la première unité radio (10) et de la deuxième unité radio (12) lorsque aucune des deux unités radio (10, 12) ne transmet l'énergie électrique supplémentaire déterminée, et fait en sorte qu'au moins l'une parmi la première unité radio (10) et la deuxième unité radio (12) transmette l'énergie électrique supplémentaire déterminée lorsque les charges respectives déterminées des unités radio (10, 12) sont compatibles avec la transmission de l'énergie électrique supplémentaire déterminée.

13. Procédé selon l'une des revendications 10 à 12, dans lequel l'unité de commande (110) fait en sorte que la première unité radio (10) cesse de fournir la première connexion sans fil (100) et que la deuxième unité radio (12) commence à fournir la deuxième connexion sans fil (120) lorsque la charge déterminée de la deuxième unité radio (12) est compatible avec la transmission de l'énergie électrique supplémentaire déterminée.

14. Unité distribuée (11) destinée à un réseau cellulaire (1), ladite unité distribuée (11) comprenant une unité de commande (110) configurée pour mettre en œuvre un procédé selon l'une des revendications 1 à 13.

15. Produit logiciel, comprenant un support de stockage numérique sur lequel est enregistré un code de programme qui, lorsqu'il est exécuté par un dispositif informatique, fait en sorte que ce dernier mette en œuvre le procédé selon l'une des revendications 1 à 13.
